# EUROPÄISCHE PATENTSCHRIFT

(11) **EP 1 454 790 B1**
(45) Veröffentlichungstag und Bekanntmachung des Hinweises auf die Patenterteilung: **20.07.2005**
(21) Anmeldenummer: 03004905.0
(22) Anmeldetag: 06.03.2003
(51) Int. Cl.: B60N 2/56, B60H 1/00, A47C 7/74

(54) **Klimatisierungssystem zum Kühlen und Heizen von Oberflächen, insbesondere von Autositzen**
Air conditioning for cooling and heating surfaces, in particular of vehicle seats
Système de conditionnement pour refroidir et chauffer des surfaces, en particulier de siège de véhicules

(43) Veröffentlichungstag der Anmeldung: 08.09.2004
(73) Patentinhaber: W.L. GORE & ASSOCIATES GmbH, 85640 Putzbrunn (DE)
(72) Erfinder: Bier, Christian, 83714 Miesbach (DE); Kerscher, Stefan, 80639 München (DE)
(74) Vertreter: Klunker . Schmitt-Nilson . Hirsch

(56) Entgegenhaltungen:
- EP-A- 0 834 420
- WO-A-03/011633
- US-A- 3 030 145
- US-A- 5 692 952
- US-A- 6 003 950
- US-A1- 2001 035 669
- US-B1- 6 273 810

## Beschreibung

Die Erfindung betrifft ein Klimatisierungssystem, welches zum schnellen Kühlen und gegebenenfalls auch zum Beheizen von Oberflächen - insbesondere von Autositzen - Verwendung finden kann. Darüber hinaus betrifft die Erfindung ein Sitz- und/oder ein Lehnenelement, insbesondere mit Lederbezug, sowie einen vollständigen Autositz, jeweils ausgestattet mit einem solchen Klimatisierungssystem. Schließlich betrifft die Erfindung noch eine Klimatisierungsmatte für ein solches Klimatisierungssystem sowie ein Klimatisierungsverfahren zum Kühlen und gegebenenfalls auch Beheizen eines Sitz- und/oder Lehnenelements.

Es ist bekannt, Sitze - insbesondere Autositze - nicht nur zu beheizen sondern auch zu kühlen. Eine Kühlung ist notwendig, wenn sich Autositze bei starker Sonneneinstrahlung auf hohe Temperaturen erhitzen, die bis hin zu ernsthaften Verbrennungen der Haut führen können. Diese Problematik stellt sich insbesondere bei dunklen Ledersitzen. Im allgemeinen muß der Fahrer warten, bis der Sitz auf eine zum Sitzen angenehme Temperatur abgekühlt ist, sei es über die Klimatisierungsanlage des Autos oder über eine natürliche Belüftung. Daher ist es ein grundsätzliches Anliegen, die Oberflächentemperatur von Sitzen in kurzer Zeit auf ein angenehmes Niveau abzusenken.

Aus der US 6,003,950, die als nächstliegender Stand der Technik angesehen wird, ist es bekannt, eine faserartige Einlage zwischen dem Sitzbezug und dem Polsterkern vorzusehen, die von einer Folie umschlossen ist. Der dem Sitzbezug zugewandte Teil der Folie weist Öffnungen zum Luftdurchtritt auf. Mittels einem Ventilator wird dann Luft durch den Sitzbezug und die Einlage hindurch gesaugt, um den Sitz zu kühlen.

Aus der US 6,254,179 B1 ist es bekannt, ein mit Wasser durchströmtes, mäanderförmiges Schlauch- oder Rohrleitungssystem in einem flachen Kissen unterhalb des Sitzbezugs anzuordnen, um die Sitzfläche je nach Bedarf zu beheizen oder zu kühlen. Das Wasser in den Leitungen wird mittels eines komplexen Wärmetauschersystems temperiert, welches z. B. an die Heiz- und Klimaanlage des Fahrzeugs angeschlossen ist.

Ein System mit ähnlichem Aufbau wird auch in der DE 44 32 497 A1 beschrieben. In diesem Fall ist das Rohrleitungssystem für die Kühlflüssigkeit in einer Klimatisierungsmatte zwischen zwei luftdurchlässigen Materiallagen angeordnet, damit eventuell an den Leitungen entstehendes Kondenswasser trocknen kann. Die Klimatisierungsmatte kann als Sitzauflage dienen oder integraler Bestandteil des Fahrzeugsitzes sein.

Wegen der relativ starren Beschaffenheit der Schläuche bzw. Rohre drückt sich das Leitungssystem unerwünschterweise durch den Sitzbezug durch und beeinträchtigt das Sitzgefühl. Bei Anordnung des Leitungssystems weiter im Inneren des Sitzes zur Abhilfe dieses Nachteils würde jedoch wegen des mit größerem Abstand zur klimatisierenden Oberfläche verbundenen schlechten Wärmeübergangs eine wesentliche Reduzierung des Wirkungsgrads eintreten.

Nachteilhaft ist es des weiteren, dass bei den vorbeschriebenen Systemen keinerlei Feuchtigkeit abgeführt wird, die beispielsweise von der Transpiration einer auf der Oberfläche sitzenden Person resultiert. Das Durchschwitzen der Bekleidung kann an heißen Tagen die Folge sein.

An Stelle einer Flüssigkeit kann auch ein Gas zur Klimatisierung des Sitzes eingesetzt werden. Ein derartiges System wird beispielsweise in der US 4,572,430 beschrieben. In diesem Fall wird temperierte Luft rückseitig in das Sitz- und Rückenlehnenpolster geleitet. Der Sitzbezug ist luftdurchlässig, so dass die Luft vorderseitig wieder aus dem Sitz austreten kann.

Ein ähnliches System wird in der US 6,273,810 B1 vorgeschlagen. Dort wird die temperierte Luft in unter dem Sitzbezug liegende Luftkammern geleitet. Einzelne Kammern werden lediglich aufgeblasen und dienen ausschließlich zur Komfortsteigerung der Sitzunterlage. Andere Kammern sind an ihrer dem Sitzbezug zugewandten Seite perforiert und dienen der Klimatisierung des Sitzes, indem die temperierte Luft durch die Perforation der Luftkammerwand und weiter durch den Sitzbezug, der ebenfalls perforiert ist, nach außen dringt.

Zwar drücken sich bei den beiden zuletzt beschriebenen Systemen keine Leitungen durch den Sitzbezug hindurch. Aber auch in diesen Fällen ist die Abführung von Feuchtigkeit nicht ideal, obwohl eine gewisse Trocknung durch den aus dem Sitz austretenden Luftstrom sicherlich erzielt wird. Jedoch verschließt die Person, die auf dem Sitz sitzt, die Poren im Sitz, so dass an diesen Stellen der Feuchtigkeitstransport und Luftaustausch nahezu vollständig blockiert ist. Im übrigen strömt die aus den offenen Poren austretende Luft an der Person vorbei, was als unangenehm empfunden werden und insbesondere im Lendenbereich gesundheitsschädlich sein kann.

Darüberhinaus neigen perforierte Sitzbezüge, insbesondere aus Leder, zum Zusetzen durch Staub und Schmutzpartikel und sind auch aus Designgründen nicht erwünscht. Ein weiterer Nachteil besteht darin, dass die beschriebenen Systeme erst beim Starten des Autos zu arbeiten beginnen, d.h. der Fahrer setzt sich zunächst auf einen heißen Sitz, bevor die Kühlung des Sitzes beginnt.

Aufgabe der vorliegenden Erfindung ist es daher, eine Lösung vorzuschlagen, um aufgeheizte Oberflächen - insbesondere von Autositzen mit Lederbezügen - in sehr kurzer Zeit auf eine angenehme Temperatur herunter zu kühlen, und zugleich einen effizienten Abtransport von Feuchtigkeit, insbesondere Schweiß, durch den Sitzbezug zu gewährleisten. Dabei sollen Sitzkomfort und Oberflächenoptik erhalten bleiben.

Diese Aufgabe wird mit einem Klimatisierungssystem bzw. einer Klimatisierungsmatte sowie einem Verfahren zur Klimatisierung eines Sitz- und/oder Lehnenelements mit den Merkmalen der nebengeordneten Patentansprüche gelöst. In davon abhängigen Ansprüchen sind vorteilhafte Weiterbildungen und Ausgestaltungen der Erfindung angegeben.

Die erfindungsgemäße Klimatisierungsmatte ist einerseits luftdurchlässig und umfaßt andererseits ein Fluidkammersystem, durch welches hindurch ein Klimatisierungsfluid geleitet wird. Zu diesem Zweck sind zwei oder mehr flüssigkeitsdichte Kunststofflagen so miteinander verbunden, beispielsweise verschweißt oder verklebt, daß in dem Raum zwischen den Kunststofflagen das Fluidkammersystem gebildet wird. Es können gegebenenfalls auch mehrere voneinander getrennte Fluidkammersysteme zwischen den Kunststofflagen gebildet sein.

Ein zwischen den Kunststofflagen gebildetes Fluidkammersystem umfaßt ein oder mehrere Fluidkammern zur Aufnahme des Klimatisierungsfluids sowie ein oder mehrere mit den Fluidkammern in Verbindung stehende Fluideinlässe und -auslässe zur Zu- bzw. Abführung des Klimatisierungsfluids zu bzw. aus dem Fluidkammersystem. Das maximale Volumen des Fluidkammersystems kann in einer Ausführungsform 0,3 l/m² bis 3 l/m² betragen. Einzelne oder alle Fluidkammern des Fluidkammersystems stehen miteinander in Strömungsverbindung, so daß das Klimatisierungsfluid von dem Fluideinlaß bzw. den Fluideinlässen durch die miteinander verbundenen Fluidkammern des Fluidkammersystems zu dem Fluidauslaß bzw. den Fluidauslässen strömen kann. Die Verbindungszonen zwischen den Fluidkammern werden nachfolgend auch als "Fluidpassagen" bezeichnet.

Die Luftdurchlässigkeit der Klimatisierungsmatte basiert auf verteilt angeordneten, die Klimatisierungsmatte durchsetzende Öffnungen. Diese Öffnungen durchsetzen die das Fluidkammersystem bildenden Kunststofflagen derart, daß das Fluidkammersystem ein geschlossenes System bleibt.

Um den Feuchtigkeitstransport durch den Sitzbezug zu garantieren, wird die Klimatisierungsmatte mit einer offenen Abstandshalterstruktur kombiniert. Als Abstandshalterstruktur kann jede flächige, offene Struktur verwendet werden, die einerseits eine Gasdurchströmung zur Ableitung von durch den Sitzbezug hindurchtretendem Wasserdampf ermöglicht und die andererseits ausreichend flexibel und dennoch druckstabil ist, so dass sie auch unter dem Gewicht einer auf ihr lastenden Person nicht kollabiert. Die Abstandshalterstruktur kann mit der Klimatisierungsmatte fest verbunden sein, beispielsweise vernäht oder vorzugsweise verklebt, so dass die Klimatisierungsmatte einschließlich der Abstandshalterstruktur einfach handhabbar und in einem Sitz integrierbar ist. Die Abstandshalterstruktur liegt vorzugsweise zwischen der Klimatisierungsmatte und dem Sitzpolster, so dass die Reihenfolge des Schichtaufbaus wie folgt ist: Sitzbezug, Klimatisierungsmatte, Abstandshalterstruktur, Sitzpolster, sowie etwaige dazwischenliegende Zusatzschichten.

Diese Anordnung ist besonders effektiv, weil die Klimatisierungsmatte direkt unterhalb des Sitzbezugs liegt. Das ergibt eine hohe Wärmeleitung und kurze Diffusionswege für Wasserdampf. Die durch den Sitzbezug hindurchtretende Transpirationsfeuchtigkeit tritt dann durch die Öffnungen in der Klimatisierungsmatte hindurch in die offene Abstandshalterstruktur ein und kann von dort wegdiffundieren. Vorzugsweise wird der Feuchtigkeitsabtransport durch einen Luftstrom unterstützt, der durch die Abstandshalterstruktur parallel zur Oberfläche des Sitzbezuges geleitet wird, um die transmittierte Feuchtigkeit aktiv abzuführen. Die Klimatisierungsmatte auf der einen Seite der Abstandshalterstruktur und das üblicherweise aus geschlossenzelligem Schaumstoff bestehende Sitzpolster auf der anderen Seite der Abstandshalterstruktur definieren dabei einen Luftleitkanal für die durch die Abstandshalterstruktur hindurch geleitete Luft.

Selbstverständlich ist es auch möglich, die Abstandshalterstruktur auf der anderen Seite der Klimatisierungsmatte vorzusehen, also zwischen dem Sitzbezug und der Klimatisierungsmatte. In diesem Falle ist die Effektivität der Klimatisierungsmatte wegen des Abstands zum Sitzbezug jedoch stark reduziert und den Durchtrittsöffnungen in der Klimatisierungsmatte kommt nicht mehr die Bedeutung zu, Transpirationsfeuchtigkeit durch die Klimatisierungsmatte durchzulassen. Vielmehr können die Öffnungen nunmehr dazu verwendet werden, einen Luftstrom von der Rückseite durch die Öffnungen der Klimatisierungsmatte hindurch in die Abstandshalterstruktur zu leiten.

Wird eine solche mit einer Abstandshalterstruktur kombinierte Klimatisierungsmatte in ein Sitz- und/oder Rückenlehnenelement zwischen dem äußeren Sitzbezug und dem eigentlichen Polstermaterial platziert, so läßt sich damit die Temperatur des Sitzbezugs sehr rasch beeinflussen und innerhalb von ca. 60 Sekunden auf Körpertemperatur herunterkühlen. Das Herunterkühlen eines Ledersitzbezugs von ca. 85 °C auf eine angenehme Körpertemperatur von 37 °C bis 40 °C kann beispielsweise in einer Minute erreicht werden. Dazu werden die Fluidkammern des Fluidkammersystems mit dem Klimatisierungsfluid durchströmt, bis die gewünschte Sitzoberflächentemperatur erreicht ist. Als Klimatisierungsfluid wird vorzugsweise eine umweltverträgliche Flüssigkeit verwendet, beispielsweise Wasser, gegebenenfalls vemischt mit einem Antifrostmittel, wie z.B. Glycol oder Salzlösung, einem Antifäulnismittel und anderen Additiven. Die Verwendung von Flüssigkeit bietet gegenüber einem Gas den Vorteil höherer Wärmekapazität bei guten Wärmeübergangseigenschaften, wodurch die Temperierung des Sitzbezugs besonders effektiv ist.

Aufgrund dieser Effektivität kann der Sitzbezug in sehr kurzer Zeit auf die gewünschte Temperatur gebracht werden, noch bevor sich eine Person darauf setzt. Beispielsweise kann sich die Temperatursteuerung automatisch einschalten, wenn das Fahrzeug entriegelt wird. Eine Aktivierung durch Fernsteuerung oder Zeitschaltung ist ebenfalls möglich. Insbesondere ist es nicht notwendig, das Fahrzeug zu starten, um die zur Temperierung des Sitzbezugs erforderliche Leistung zur Verfügung zu stellen. Die Klimatisierungsflüssigkeit muß zum Kühlen des Sitzbezugs nicht notwendigerweise heruntergekühlt sein, sondern kann aus einem Vorratsbehälter gepumpt werden, der sich an einem relativ kühlen Ort z.B. im Bereich des Fahrzeugbodens befindet, so dass die Klimatisierungsflüssigkeit maximal Umgebungstemperatur besitzt. Dieser Vorratsbehälter besitzt vorzugsweise eine isolierende Ummantelung. Der darin enthaltene Flüssigkeitsvorrat kann zusätzlich gekühlt werden, beispielsweise während der Fahrt oder gegebenenfalls auch bei abgestelltem Motor, wenn die Fahrzeugbatterie genug Leistung bringt. Als Kühlelement kommt beispielsweise ein Peltierelement in Betracht.

Nach dem gleichen Prinzip kann der Sitzbezug erwärmt werden. Dazu strömt ein erwärmtes Fluid, wie beispielsweise Wasser, durch das Fluidkammersystem. Das Fluid wird in einer bevorzugten Ausführungsform durch ein Heizelement auf eine Temperatur von etwa 40°C bis 50°C erwärmt.

Das Klimatisierungsfluid wird so lange durch das Fluidkammersystem gepumpt, bis die gewünschte Temperatur erreicht ist. Anschließend werden die Fluidkammern des Fluidkammersystems leergepumpt. Da das Fluidkammersystem durch miteinander verbundene Kunststofffolien gebildet wird, fallen die leergepumpten Kammern in sich zusammen und bilden eine weitgehend ebene Fläche. Um ein vollständiges Entleeren aller Fluidkammersystembereiche zu gewährleisten, ist es vorteilhaft, im Fluidkammersystem Abstandshalter zu integrieren, beispielsweise dünne Fasern, Gewebe oder Non-Woven. Bei entleertem Fluidkammersystem drückt sich die Klimatisierungsmatte somit nicht durch den Sitzbezug durch, so dass sofort nach Erreichen der gewünschten Sitzbezugtemperatur die ursprünglichen Sitzkomforteigenschaften wieder hergestellt sind. Der optische Eindruck der Oberfläche wird durch die Klimatisierungsmatte nicht beeinträchtigt. Eine auf dem Sitz sitzende Person spürt von der Klimatisierungsmatte nichts.

Wenn sich nun eine Person auf den zuvor wohl temperierten Sitz setzt, wird sie im üblichen Maße oder - bei heißen Außentemperaturen - gegebenenfalls auch verstärkt transpirieren. Bei herkömmlichen Sitzen führt dies häufig zum Durchschwitzen der am Sitzbezug anliegenden Bekleidung. In diesem Zusammenhang kommt nun den verteilt in der Klimatisierungsmatte angeordneten Öffnungen wesentliche Bedeutung zu. Denn diese Öffnungen bieten die Möglichkeit, diese Transpirationsfeuchtigkeit passiv oder vorzugsweise aktiv abzuführen. Voraussetzung dafür ist zunächst einmal, dass die Feuchtigkeit durch den Sitzbezug hindurch treten kann. Bei Textilbezügen ist dies ohne weiteres gewährleistet, da Textilbezüge für Feuchtigkeit wie ein Docht wirken. Standardlederautositzbezüge sind nicht oder kaum atmungsaktiv, d.h. sie können bestenfalls nur minimale Mengen Wasserdampf abführen. Inzwischen gibt es aber auch atmungsaktive Leder, welche ohne Perforierung ausreichend feuchtigkeitsdurchlässig sind und daher für Sitzbezüge verwendet werden können. Anstelle von dampfdurchlässigen Lederbezügen kann selbstverständlich auch perforiertes Leder für den Sitzbezug verwendet werden.

Obwohl die vorbeschriebene Klimatisierungsmatte im wesentlichen zur Kühlung von Oberflächen bestimmt ist, kann sie auch zum Beheizen von Oberflächen genutzt werden. Beide Funktionen sind auch kombinierbar. Eine bevorzugte Ausführungsform sieht dazu eine Bypassleitung in dem Fluidkreislauf vor, mit dem das Kühlfluidreservoir umgangen wird. In der Bypassleitung befindet sich ein Heizelement, vorzugsweise ein Durchlauferhitzer, mit dem das Klimatisierungsfluid erwärmt wird, um darüber die Oberfläche zu beheizen. Selbstverständlich kann die Heizfunktion der erfindungsgemäßen Klimatisierungsmatte auch lediglich zur Unterstützung mit herkömmlichen Heizelementen kombiniert werden, wie z. B. mit einer elektrischen Widerstandsheizung im Sitz- und/oder Rückenlehnenelement und dergleichen.

Die besonderen mit der Erfindung erzielten Vorteile sind darin zu sehen, dass ein schnell wirkendes Klimatisierungssystem - insbesondere zur schnellen Kühlung/Heizung und zur effizienten Entfeuchtung - zur Verfügung gestellt wird, welches den Sitzkomfort und auch die Optik der zu kühlenden Oberfläche nicht beeinträchtigt, welche effektiv ist und welche von einer auf dem Sitz sitzenden Person nicht als unangenehm empfunden wird. Darüber hinaus ist die erfindungsgemäße Klimatisierungsmatte einfach handhabbar und in einfacher Weise in ein Sitz- und Rückenlehnenelement integrierbar.

Ein weiterer Vorteil des erfindungsgemäßen Klimatisierungssystems mit der erfindungsgemäßen Klimatisierungsmatte besteht in der Widerstandsfähigkeit gegenüber den typischen Belastungen, denen ein Sitzelement eines Autositzes ausgesetzt ist. Autositze sind Dauerbelastungen ausgesetzt, die auch das in den Sitz integrierte Klimatisierungssystem überstehen muß. Herkömmliche Rohr- und Schlauchleitungstemperierungssysteme können sich dabei im Laufe der Zeit beträchtlich verschieben und mechanisch beschädigt werden, sofern sie nicht in aufwendiger Weise ins Sitzelement integriert sind. Im Vergleich dazu läßt sich die erfindungsgemäße Klimatisierungsmatte in einfacher Weise mit dem Sitzbezug oder dem Polsterkern durch Verkleben und/oder Vernähen fest verbinden. Aber selbst ohne eine solche Fixierung verschiebt sich die erfindungsgemäße Klimatisierungsmatte wegen ihrer großflächigen Ausdehnung unter dem Sitzbezug nicht. Dies insbesondere dann nicht, wenn die Klimatisierungsmatte mit einer Abstandshalterstruktur fest kombiniert ist. Die hohe Widerstandsfähigkeit der erfindungsgemäßen Klimatisierungsmatte gründet darüber hinaus auch auf der - besonders bei Fluorpolymeren - sehr glatten Oberfläche der Kunststoffolien der Klimatisierungsmatte, welche aufgrund eben dieser Eigenschaft nicht am Sitzbezug scheuert, so dass kein Reibverschleiß auftritt. Schließlich ist noch zu erwähnen, dass die das Fluidkammersystem bildenden Kunststofflagen zusätzliche Verstärkungsschichten aufweisen können, beispielsweise in Gestalt eines Nylongewebes.

Die vorerwähnten Vorteile können durch geeignete Wahl der das Fluidkammersystem bildenden Kunststofflagen optimiert werden.

Um die Klimatisierungsmatte in einfacher Weise herstellen zu können, sollten die Kunststofflagen miteinander verschweißbar, laminierfähig, koextrudierbar, sinterfähig oder blasformbar sein. Grundsätzlich geeignet sind beispielsweise die folgenden Materialien: thermoplastisches Polyurethan (TPU), thermoplastisches Polyester (TPE), Polyamid (PA), Polytetrafluorethylen (PTFE), gerecktes Polytetrafluorethylen (ePTFE), Polyvinylidenfluorid (PVDF), Ethylen/Tetrafluorethylen Copolymer (ETFE), fluoriniertes Ethylenpropylen (FEP) und andere Fluorpolymere. Vorzugsweise sind diese Materialien faser- oder gewebeverstärkt.

Von diesen Materialien eignet sich TPU im besonderen Maße wegen seiner Flexibilität bei guter Verklebbarkeit mit anderen Materialien, insbesondere mit Leder. Fluorpolymere eignen sich wegen ihrer Diffusionsdichtheit und guten Gleiteigenschaften und damit einhergehenden Widerstandsfähigkeit gegenüber Verschleiß, sind aber weniger gut verklebbar mit Sitzbezugmaterialien. Fluorpolymere sind darüber hinaus hoch temperaturbeständig und eignen sich daher besonders in Kombination mit einem in das Polster integrierten Heizelement. Solche Heizelemente können bis zu 120 °C heiß werden. Ein besonders temperaturbeständiges Fluorpolymer ist beispielsweise PTFE. Schließlich zeichnen sich Fluorpolymere durch hohe chemische Beständigkeit aus, was bei Verwendung von Additiven im Klimatisierungsfluid bedeutsam wird.

Darüber hinaus sollten die Kunststofflagen, aus denen das Fluidkammersystem gebildet ist, möglichst dünn und flexibel sein, damit sich das Fluidkammersystem ohne Schwierigkeiten entleeren läßt und dabei ohne größere Falten zusammenlegt, so dass die deaktivierte Klimatisierungsmatte durch den Polsterbezug nicht spürbar und nicht sichtbar ist. Die Kunststofflagen können beispielsweise jeweils eine Dicke im Bereich von 10 µm bis 1 mm besitzen, wobei gute Ergebnisse beispielsweise mit einer Schichtdicke von jeweils 200 µm erzielt wurden.

Für ein wartungsarmes System ist es vorteilhaft, den Fluidkreislauf im Fluidkammersystem als geschlossenes System zu betreiben. In diesem Fall sollte großen Wert auf die Diffusionsdichtheit der verwendeten Kunststofffolie gelegt werden, damit Fluidverluste über die Lebensdauer gering gehalten werden.

Möglich ist jedoch auch die Variante eines teilweise offenen Systems. Hierbei wird die Entleerung und vollständige Befüllung des Fluidkammersystems zusätzlich dadurch unterstützt, dass mindestens eine der das Fluidkammersystem bildenden Kunststofflagen zwar flüssigkeitsdicht aber zumindest bereichsweise luftdurchlässig ist, so dass ein Luftaustausch durch die Fluidkammerwand erfolgen kann, insbesondere zum passiven Entlüften von unerwünschten Lufteinschlüssen. Besonders geeignet ist in diesem Zusammenhang gerecktes Polytetrafluorethylen (ePTFE) mit einer geringen Porosität, um Verdunstungsverluste während des Betriebes gering zu halten. Tests mit einer geringen Porosität von beispielsweise 2% bis 30% (gemessen mit einem Capillary Flow Porometer CFP-1500-AXLS der Firma PMI - Porous Materials Inc., USA) und einem hohen Wassereintrittsdruck über 6 bar haben gute Ergebnisse gebracht.

Die der Entfeuchtung dienenden Öffnungen in der Klimatisierungsmatte können 20% bis 80% der projizierten Fläche einer jeden der das Fluidkammersystem bildenden Kunststofflagen umfassen. Gute Ergebnisse wurden beispielsweise mit einem Öffnungsflächenanteil von 30% bis 40% bezogen auf die projizierte Gesamtfläche erzielt. Die Kontur der Öffnungen kann beliebig gewählt werden. Sie müssen insbesondere nicht kreisrund sein und können unterschiedlich groß sein. Die Öffnungen sollten einen möglichst geringen Diffusionswiderstand bieten und daher jedenfalls makroskopisch sein, um die Entfeuchtung durch die Öffnungen hindurch nicht zu behindern. Ein durchschnittlicher Öffnungsdurchmesser kann beispielsweise im Bereich von 1 mm bis 30 mm liegen. Gute Ergebnisse wurden beispielsweise mit einem durchschnittlichen Öffnungsdurchmesser von etwa 5 mm erzielt. Aufgrund der dünnen Wandstärke des Fluidkammersystems und der großen, das Fluidkammersystem durchdringenden Öffnungen wird ein niedriger Diffusionswiderstand für den durch die Öffnungen hindurchtretenden Wasserdampf erreicht. Feuchtigkeitsbeladene Luft kann relativ ungehindert durch die Öffnungen hindurch in die Abstandshalterstruktur hinein gelangen und wird von der die Abstandshalterstruktur durchströmenden Luft abtransportiert.

So wie die Öffnungen eine beliebige Kontur, Größe und Anordnung innerhalb der Klimatisierungsmatte haben können, so können auch die Kammern des Fluidkammersystems unterschiedlichste Gestalt besitzen. Eine gleichmäßige Anordnung der Fluidkammern ist zum Zwecke einer gleichmäßigen Temperierung des Sitzbezugs selbstverständlich zu bevorzugen. Es besteht dabei die Möglichkeit, ein oder mehrere Fluidkammersysteme in einer Klimatisierungsmatte zu realisieren, wobei jedes Fluidkammersystem wiederum ein oder mehrere Fluideinlässe und/oder Fluidauslässe besitzen kann. Es können ein oder mehrere gemeinsame Fluidein- und -auslässe vorgesehen sein, jedoch sind voneinander unabhängige Fluidein- und -auslässe zu bevorzugen, um eine kontinuierliche Durchströmung der Fluidkammern zu ermöglichen. Besonders vorteilhaft ist es, wenn genau ein Fluideinlaß und ein Fluidauslaß jeweils für ein Sitzelement und ein Lehnenelement vorgesehen sind und wenn die jeweiligen Fluidkammersysteme zahlreiche untereinander in Fluidverbindung stehende Fluidkammern besitzen, so dass das Klimatisierungsfluid einseitig in das Fluidkammersystem einströmt und die zahlreichen Fluidkammern teilweise parallel und teilweise sukzessive durchströmt, um anschließend aus dem Fluidauslaß wieder auszuströmen.

Eine derartige Struktur ist einerseits unkompliziert in seiner Herstellung und Integration in ein Kreislaufsystem. Andererseits sind die Strömungswege kurz, so dass der Strömungswiderstand gering und der Wärmeübergang über die gesamte Strömungslänge nahezu gleichmäßig ist. Die zwischen miteinander in Verbindung stehenden Fluidkammern gebildeten Fluidpassagen sollten eine Länge im Bereich von 3 mm bis 50 mm aufweisen, um eine optimale Durchmischung des Fluids zu erreichen.

Ein effektiver Wärmeübergang wird des weiteren dadurch unterstützt, dass sich die Klimatisierungsmatte im mit Klimatisierungsfluid durchströmten Zustand geringfügig aufbläht und gegen den Sitzbezug drückt. Die Gesamtdicke der gefüllten Klimatisierungsmatte bewegt sich zwischen etwa 0,5 mm und 10 mm.

Nachfolgend wird die Erfindung beispielhaft anhand der begleitenden Zeichnungen erläutert. Darin zeigen:
- Figur 1a: einen Autositz mit integrierten Klimatisierungsmatten schematisch im Querschnitt,
- Figur 1b: die Anordnung der Klimatisierungsmatten gemäß Figur 1 im Autositz in Draufsicht,
- Figur 2: den Ausschnitt A aus Figur 1 während einer Kühl- oder Heizphase,
- Figur 3: denselben Ausschnitt wie Figur 2 nach abgeschlossener Kühl- bzw. Heizphase während der Entfeuchtungsphase,
- Figur 4: den Ausschnitt aus Figur 3 in realistischen Größenverhältnissen,
- Figur 5: ein erstes Ausführungsbeispiel einer Klimatisierungsmatte in Draufsicht,
- Figur 6: ein zweites Ausführungsbeispiel einer Klimatisierungsmatte in Draufsicht,
- Figur 7: ein drittes Ausführungsbeispiel einer Klimatisierungsmatte in Draufsicht und
- Figur 8: eine schematische Darstellung eines Klimatisierungskreislaufs.

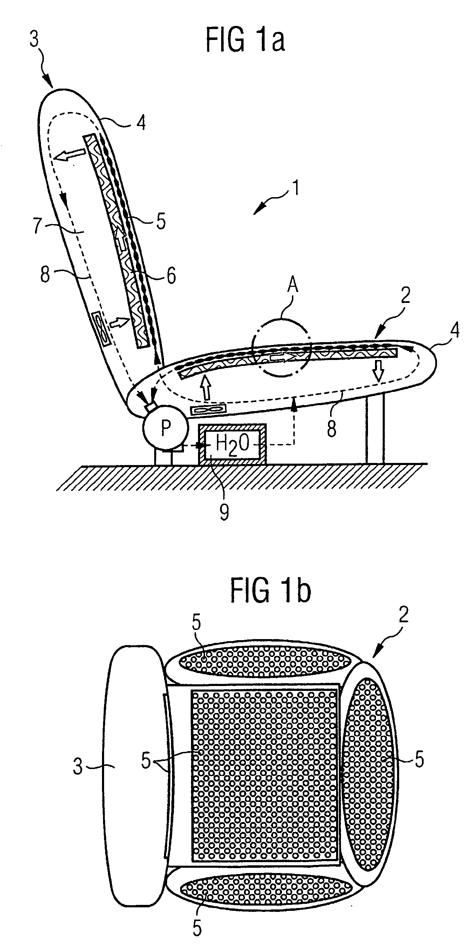

Figur 1a zeigt einen Autositz 1 umfassend ein Sitzelement 2 und ein Rückenlehnenelement 3. Unter den Sitzbezügen 4 sowohl des Sitzelements 2 als auch des Rückenlehnenelements 3 befindet sich jeweils eine Klimatisierungsmatte 5, die durch eine Abstandshalterstruktur 6 von dem Polsterkern 7 auf Abstand gehalten wird. Durch ein Fluidleitungssystem 8, welches in Fig. 1a durch Strichlinien mit dünnen, schwarzen Pfeilen dargestellt ist, wird als Klimatisierungsflüssigkeit Wasser (H₂O) aus einem Vorratsbehälter 9 durch die Klimatisierungsmatte 5 mittels einer Pumpe P gepumpt, um den Sitzbezug 4 von der Rückseite aus zu temperieren (Temperierungsphase), insbesondere zu kühlen (Kühlphase). Nach Beendigung der Temperierungsphase wird mittels eines Ventilators Luft durch die Abstandshalterstruktur 6 geströmt (weiße Pfeile in Fig. 1a), um die Ableitung von durch den Sitzbezug 4 hindurchtretender Transpirationsfeuchtigkeit zu unterstützen.

Figur 1b zeigt die Anordnung der Klimatisierungsmatten 5 im Autositz 1 gemäß Figur 1 in Draufsicht.

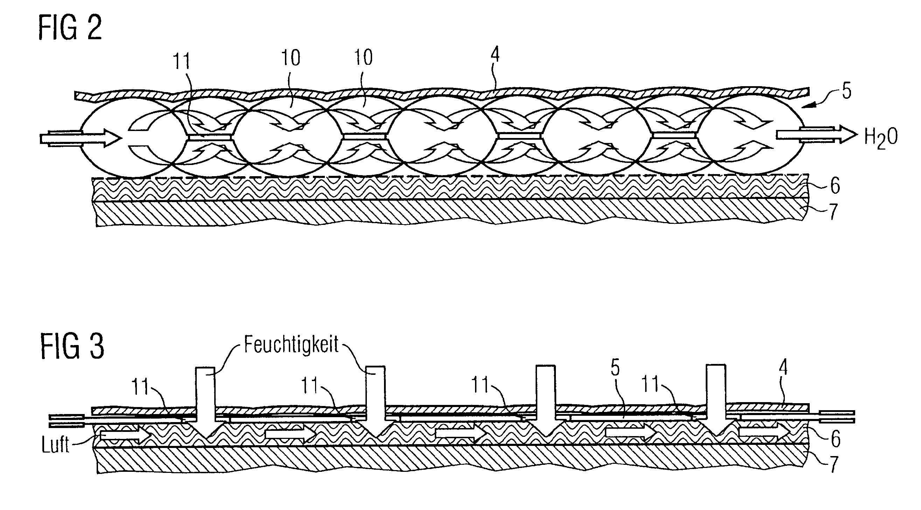

Die Kühlphase (oder Heizphase) ist in Figur 2 schematisch etwas detaillierter im Querschnitt dargestellt. Die Klimatisierungsmatte 5 besteht aus regelmäßig angeordneten, untereinander verbundenen Fluidkammern 10, wobei die einzelnen Fluidkammern durch die Klimatisierungsmatte 5 durchdringende Öffnungen 11 voneinander beabstandet sind. Wenn das durch Fluidkammern 10 gebildete Fluidkammersystem mit der Kühlflüssigkeit gefüllt wird, blähen sich die Fluidkammern 10 bis zu einer Dicke auf, die zwischen 0,5 und 10 mm liegen sollte, und legen sich dicht an die Rückseite des Sitzbezugs 4 an. Dadurch wird ein besonders effektiver Wärmeübergang zwischen dem Klimatisierungsfluid in den Fluidkammern 10 und dem Sitzbezug 4 erreicht. Die Durchströmung des Fluidkammersystems kann intermittierend oder kontinuierlich erfolgen. Die Struktur des Fluidkammersystems drückt sich in dieser Klimatisierungsphase geringfügig durch den Sitzbezug 4 hindurch.

Wenn eine gewünschte Sitzbezugtemperatur erreicht ist, wird ein in der Figur 1 nicht dargestelltes Sperrventil in der Zuleitung des Fluidleitungssystems 8 zur Klimatisierungsmatte 5 geschlossen und das in den Klimatisierungsmatten 5 verbliebene Klimatisierungsfluid restlos in den Vorratbehälter 9 zurückgepumpt. Dabei kollabieren die Fluidkammern 10, so dass die Klimatisierungsmatte 5 in sich zusammenfällt. Dies ist schematisch etwas detaillierter in Figur 3 dargestellt. Aufgrund der dünnen und flexiblen Kunststoffolien, aus denen das Fluidkammersystem gebildet ist, drückt sich die Klimatisierungsmatte 5 im kollabierten Zustand nicht mehr durch den Sitzbezug 4 durch. Etwaige kleinere Falten machen sich nicht wesentlich bemerkbar.

Wenn sich eine Person nach der Abkühlphase auf den temperierten Sitz setzt, beginnt die zweite Klimatisierungsphase, die darauf abzielt, von der Person transpirierte Feuchtigkeit durch den Sitzbezug 4 und die Öffnungen 11 der Klimatisierungsmatte 5 hindurch abzuführen. Zu diesem Zweck ist zwischen dem Polsterkern 7 und der Klimatisierungsmatte 5 die Abstandshalterstruktur 6 vorgesehen. Als Abstandshalterstruktur 6 kommt jede offene Struktur in Betracht, die einerseits flexibel ist, um dem Sitz einen angenehmen Sitzkomfort zu verleihen, die sich aber andererseits unter Druckeinwirkung nicht vollständig zusammendrücken läßt, so dass eine Durchlüftung der Abstandshalterstruktur 6 unter allen Umständen gewährleistet bleibt. Geeignet sind beispielsweise Faservliese oder -gewirke aus Polymerfasern. Die Ableitung der durch den Sitzbezug 4 transportierten Feuchtigkeit wird unterstützt durch einen aktiv erzeugten Luftstrom in der Abstandshalterstruktur 6, die in Figur 3 durch Pfeile angedeutet ist.

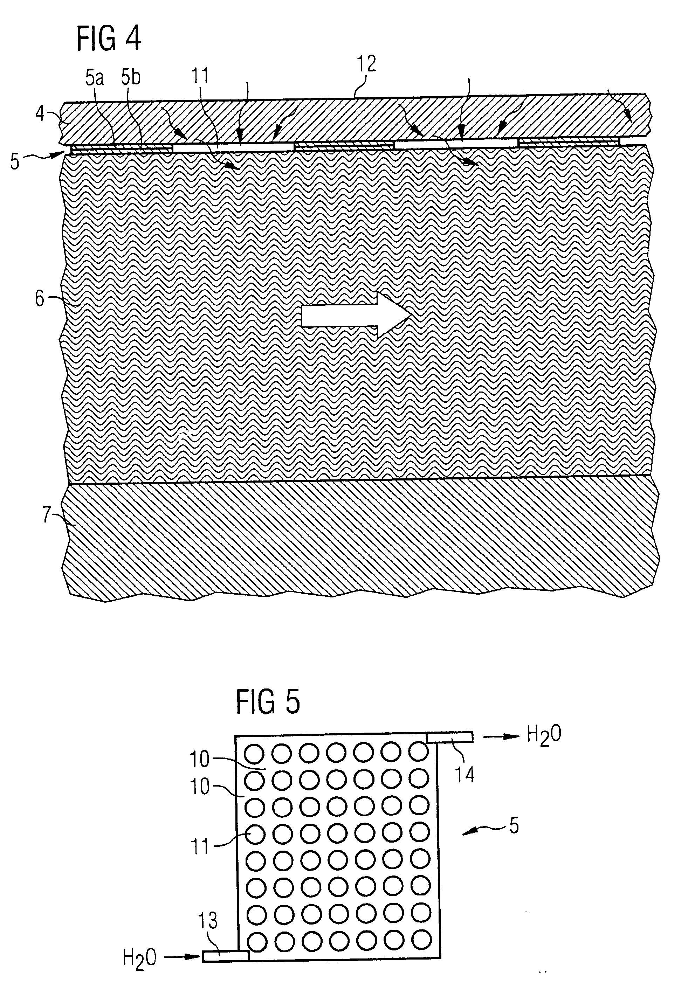

Der in Figur 3 dargestellte Ausschnitt ist in Figur 4 nochmals vergrößert mit realistischen Proportionen der einzelnen Schichten wiedergegeben. Der Sitzbezug 4 weist beispielsweise etwa eine Stärke von 1,2 mm auf und ist wasserdampfdurchlässig. Als Material für den Sitzbezug kann atmungsaktives Leder, mikroperforiertes Leder, Mikrofasern wie Alcantara oder ein gewebter Textilbezug verwendet werden. Der Sitzbezug sollte vorzugsweise einen Ret-Wert von 5 bis 20 m²Pa/W besitzen. Der Ret-Wert definiert als spezifische Materialeigenschaft von textilen Flächengebilden und sonstigen textilen Materialaufbauten deren Wasserdampfdurchgangswiderstand. Dabei wird der latente Verdampfungswärmefluß durch eine gegebene Fläche infolge eines bestehenden stationären Partialdrucks bestimmt. Der Ret-Wert wird mittels dem Hohenstein-Hautmodellversuch ermittelt, der in der Standard-Prüfvorschrift Ne. BPI 1.4 vom September 1987 des Bekleidungsphysiologischen Instituts e.V. Hohenstein beschrieben wird.

Handelt es sich um einen Lederbezug, so ist dessen Außenseite üblicherweise mit einer Schutzschicht 12 weitgehend versiegelt. Die Feuchtigkeitsdurchlässigkeit eines ledernen Sitzbezugs 4 hängt daher im wesentlichen von den Wasserdampftransporteigenschaften der Schutzschicht 12 ab. Für die Zwecke der vorliegenden Erfindung sollte der Lederbezug vorzugsweise einen MVTR-Wert (nach DIN 53 333) von größer 10 mg/cm²h haben. Besonders bevorzugt sind atmungsaktive Leder mit einem MVTR-Wert von mehr als 12 mg/cm²h. Solche Leder sind beispielsweise bei der Lederfabrik Vogl in Mattighofen/Österreich erhältlich. Im Falle eines nicht atmungsaktiven, insbesondere vollversiegelten Lederbezugs kommt auch eine Mikroperforation des Bezugs in Betracht. Darunter ist ein Leder mit üblicherweise in einem Nadelungsprozeß erzeugten Poren mit einem Porendurchmesser von 80 µm bis 100 m zu verstehen. Mikroperforierte Leder mit einer Dicke zwischen 1,9 mm und 2,5 mm erzielen einen MVTR-Wert zwischen 2 und 6 mg/cm²h, was für die Zwecke der Erfindung ausreichend sein kann.

Durch den permeablen Sitzbezug 4 diffundiert dann die transpirierte Feuchtigkeit zur Klimatisierungsmatte 5 und durch die Öffnungen 11 der Klimatisierungsmatte 5 hindurch in die darunter liegende Abstandshalterstruktur 6. Die Klimatisierungsmatte 5 besteht im wesentlichen aus zwei dünnen, übereinanderliegenden und in geeigneterweise miteinander verbundenen Kunststoffolien 5a, 5b. Im entleerten Zustand besitzt die Klimatisierungsmatte 5 eine leicht rauhe Oberfläche durch Faltenbildungen der dünnen Kunststoffolien 5a, 5b. Dadurch kann Feuchtigkeit auch von solchen Stellen des Sitzbezugs 4 zu einer Öffnung 11 der Klimatisierungsmatte 5 gelangen, unter denen sich nicht unmittelbar eine Öffnung 11 befindet.

Aufgrund der beiden dünnen Folien 5a, 5b mit einer Dicke von jeweils beispielsweise 200 µm ist der Weg durch die Öffnungen 11 sehr kurz. In einer Ausführungsform hat die gefüllte Klimatisierungsmatte 5 eine Dicke von 4 mm. Es bildet sich insbesondere kein Feuchtestau in den Öffnungen 11 und keine Grenzschicht zwischen der Luft in den Öffnungen 11 und der durch die Abstandshalterstruktur 6 strömenden Luft aus, so dass die durch den Sitzbezug 4 diffundierende Feuchtigkeit zuverlässig von dem Luftstrom in der Abstandshalterstruktur 6 mitgenommen wird. Aus demselben Grund sind die Öffnungsdurchmesser der Öffnungen 1 vergleichsweise groß gewählt und betragen in dem dargestellten Ausführungsbeispiel etwa 3,5 mm.

Die Abstandshalterstruktur 6 besitzt ihrerseits eine Stärke von etwa 6 mm bis 10 mm in dem dargestellten Ausführungsbeispiel. Je nach dem verwendeten Material für die Abstandshalterstruktur 6 kann es sinnvoll sein, die Abstandshalterstruktur 6 dicker oder dünner auszulegen.

Mit seiner Rückseite grenzt die Abstandshalterstruktur 6 an den Polsterkern 7 an, der beispielsweise ein geschlossenzelliger Schaumkern ist. Der durch die Abstandshalterstruktur 6 geleitete Luftstrom (Pfeil) wird daher im wesentlichen parallel zum Bezug zwischen der Klimatisierungsmatte 5 und dem geschlossenzelligen Polsterkern 7 zwangsgeführt.

Die Abstandshalterstruktur 6 und die Klimatisierungsmatte 5 können miteinander verklebt sein, wodurch die Gesamtanordnung einfach handhabbar und entsprechend leicht in einen Autositz integrierbar ist. Falls die Klimatisierungsmatte 5 nicht mit dem Abstandshalter 6 verklebt ist, ist es wesentlich, dass die Abstandshalterstruktur 6 eine nicht abrasive Oberfläche besitzt, da ansonsten eine Beschädigung der dünnen Kunststofffolien 5a, 5b der Klimatisierungsmatte 5 auf längere Zeit zu befürchten wäre.

Die Klimatisierungsmatte 5 ist vorzugsweise - mit oder ohne Abstandshalterstruktur 6 - mit dem Sitzbezug 4 verbunden, vorzugsweise verklebt. Dadurch wird ein Scheuern zwischen Sitzbezug 4 und Klimatisierungsmatte 5 vermieden, wodurch sich die Lebensdauer der Klimatisierungsmatte 5 entsprechend erhöht.

Der notwendige Luftdurchsatz durch die Abstandshalterstruktur 6 zur Entfeuchtung des Sitzbezugs 4 ist äußerst gering, da nur wenig Feuchtigkeit durch den Sitzbezug hindurch abgeführt wird. Daher reicht es aus, wenn mittels einem einfachen Ventilator mit einer Leistung von beispielsweise 0,3 bis 3 W in unkomplizierter Weise Luft aus dem Fahrzeuginnenraum durch die Abstandshalterstruktur 6 geblasen wird. In einer Ausführungsform ist die Abstandshalterstruktur 6 direkt oder indirekt mit dem Belüftungssystem bzw. der Klimaanlage des Fahrzeugs verbunden.

In Figur 5 ist ein erstes Ausführungsbeispiel einer Klimatisierungsmatte 5 in Draufsicht dargestellt. Die Klimatisierungsmatte 5 besteht aus zwei miteinander verschweißten oder laminierten Folien, die von regelmäßig verteilten Öffnungen 11 durchdrungen sind. Dadurch wird ein Fluidkammersystem bestehend aus zahlreichen miteinander in Verbindung stehenden Fluidkammern 10 gebildet. Die beiden miteinander verbundenen Folien 5a, 5b können auch durch einen blasgeformten und flachgelegten Folienschlauch oder durch Koextrusion hergestellt sein, wobei die Öffnungen 11 in einem nachfolgenden Vefahrensschritt unter gleichzeitigem Verschweißen der Folien aus dem Folienstapel herausgetrennt werden.

Über einen Fluideinlaß 13 wird als Klimatisierungsfluid Wasser (H₂O) in das Fluidkammersystem hinein und durch einen Fluidauslaß 14 wieder hinausgeleitet. Das Klimatisierungsfluid H₂O verteilt sich dabei gleichmäßig in dem Fluidkammersystem und gelangt - im Gegensatz zu einem mäanderförmigen Leitungssystem - auf relativ kurzem Wege vom Fluideinlaß 13 zum Fluidauslaß 14. Das Fluidkammersystem kann aber abweichend von dem in Figur 5 dargestellten Ausführungsbeispiel auch ein oder mehrere leitungsähnliche Fluidkammern aufweisen, die parallel oder mäandrierend angeordnet sind. Es können auch mehrere Fluideinlässe und/oder Fluidauslässe vorgesehen sein. Das Ausführungsbeispiel gemäß 5 ist jedoch besonders effizient, leicht herstellbar und wegen der lediglich zwei Ein- und Auslässe mit wenig Aufwand in den Sitz integrierbar.

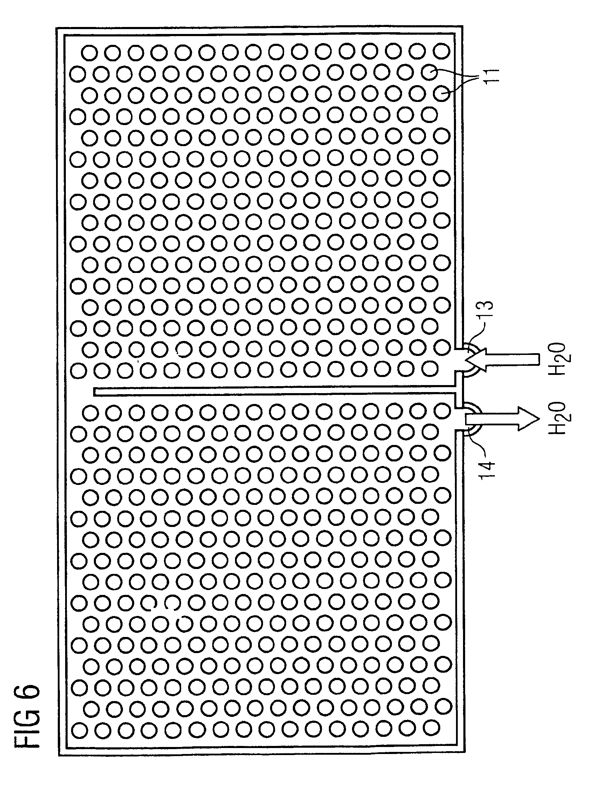

Figur 6 zeigt ein zweites Ausführungsbeispiel einer Klimatisierungsmatte 5 ebenfalls schematisch in Draufsicht. In diesem Fall sind die Öffnungen 11 versetzt zueinander angeordnet, wodurch sie dichter gepackt sind und die Entfeuchtung durch die Öffnungen entsprechend effektiver ist.

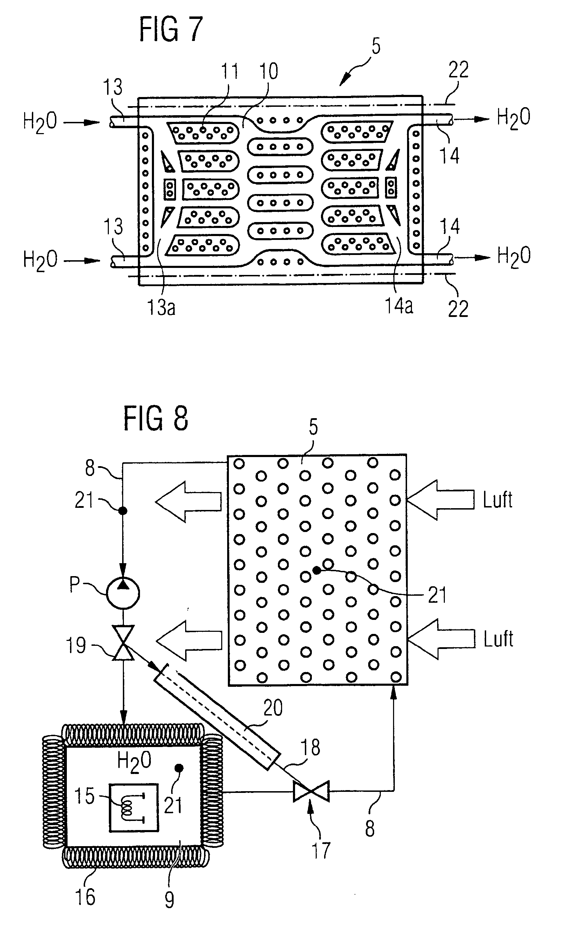

Figur 7 zeigt ein drittes Ausführungsbeispiel einer Klimatisierungsmatte 5 ebenfalls schematisch in Draufsicht. In diesem Fall sind zwei Fluideinlässe 13 und zwei Fluidauslässe 14 vorgesehen. Über eine Fluideinlaßverteilerkammer 13a und eine Fluidauslaßsammelkammer 14a kann Fluid gleichzeitig in eine und aus einer Mehrzahl von daran angrenzenden Fluidkammern 10 strömen, die ihrerseits in Strömungsrichtung teils parallel und teils hintereinander angeordnet sind. Die Fluidkammern 10 definieren Fluidpassagen beliebiger Länge, die vorzugsweise eine Länge von etwa 50 mm oder weniger betragen sollten. Zwischen den Fluidkammern 10 sind die die Klimatisierungsmatte 5 bildenden Folien miteinander verschweißt. In diesen verschweißten Bereichen sind die Öffnungen 11 vorgesehen, durch welche hindurch die Entfeuchtung erfolgt. Die Klimatisierungsmatte 5 ist in diesem Fall mittels Nähten 22 an dem hier nicht dargestellten Sitzpolster fixiert. Eine Verklebung ist allerdings zu bevorzugen, da sie sich im Sitzbezug nicht abzeichnet.

Figur 8 zeigt ein geeignetes Klimatisierungssystem schematisch. Mittels einer Pumpe P wird Wasser H₂O aus dem Vorratsbehälter 9 heraus durch die Klimatisierungsmatte 5 hindurch und zurück in den Vorratsbehälter 9 gepumpt. Das Klimatisierungsfluidvolumen im Gesamtsystem kann beispielsweise im Bereich von 500 ml bis 1.500 ml liegen, wobei der Vorratsbehälter 9 beispielsweise 800 ml oder 1.000 ml und die Klimatisierungsmatte 5 zwischen 50 ml und 250 ml beispielsweise 200 ml, fassen. Der Betriebsdruck der Pumpe P liegt im Bereich zwischen 0,2 und 2 bar, beispielsweise etwa bei 0,5 bar. Die Pumpenlaufzeit liegt vorzugsweise zwischen 10 Sekunden und 120 Sekunden, sollte aber 90 Sekunden möglichst nicht überschreiten. Die dafür notwendige Leistung kann bequem von der fahrzeugeigenen Batterie zur Verfügung gestellt werden. Selbst wenn das Klimatisierungsfluid in dem Vorratsbehälter 9 Umgebungstemperatur von 32 °C bis 40 °C besitzt, läßt sich mit diesem System beispielsweise ein Ledersitzbezug in maximal 90 Sekunden auf eine gewünschte Temperatur von etwa 37 °C bis 44 °C bringen. Eine Kühlung um 40 K innerhalb von weniger als 60 Sekunden ist erreichbar. Wenn die Sitzbezugtemperatur auf beispielsweise 35 °C abgesenkt ist, wird die Klimatisierungsmatte 5 leergepumpt und die Pumpe P gestoppt. Selbstverständlich sind auch höhere Betriebsdrücke möglich, sofern das Fluidkammersystem für höhere Drücke ausgelegt ist. Betriebsdrücke von 1,5 bis 2 bar sind derzeit realistischerweise erreichbar. Aus Sicherheitsgründen sollte die Klimatisierungsmatte Betriebsdrücken bis zu etwa 3 bar standhalten. Je höher der Betriebsdruck ist, desto stärker drückt sich die Klimatisierungsmatte 5 gegen den Sitzbezug und desto effektiver ist der Wärmeübergang und damit die Temperierung des Sitzbezugs. Somit kann der Wärmeübergang durch den Systemdruck gesteuert werden.

Die Temperatur im Vorratsbehälter 9 kann mittels eines Temperatursensors überwacht und durch eine geeignete Kühleinrichtung im Bedarfsfall herunter gekühlt werden. Als Kühleinrichtung 15 ist beispielsweise ein PeltierElement geeignet. Zusätzlich ist der Vorratsbehälter 9 mit einer Isolierung ummantelt, um einen Wärmeaustausch mit der wärmeren Umgebung zu verhindern.

Nachdem die gewünschte Sitzbezugtemperatur erreicht ist, wird in der Zuleitung des Fluidleitungssystems 8 das Ventil 17 gesperrt und die Klimatisierungsmatte 5 leergepumpt. In der anschließenden Entfeuchtungsphase während der Fahrt wird, wie zuvor beschrieben, mittels einem einfachen Ventilator Luft durch die in Figur 6 nicht dargestellte Abstandshalterstruktur 6 an der Klimatisierungsmatte 5 vorbei geleitet.

Eine besondere Weiterbildung sieht einen Bypass 18 vor, mit dem der Kühlfluidvorratsbehälter 9 umgangen wird. Durch entsprechendes Schalten des Sperrventils 17 und eines weiteren Sperrventils 19, die demzufolge als Mehrwegeventile ausgeführt sind, kann die im Klimatisierungssystem vorhandene Flüssigkeit durch den Bypass 18 geleitet und mittels einem darin angeordneten Heizelement 20, beispielsweise einem Durchlauferhitzer, erwärmt werden. Dadurch kann das Klimatisierungssystem sowohl als Sitzheizung als auch als Sitzkühlung dienen. Aufgrund des Betriebsdrucks preßt sich die Klimatisierungsmatte 5 wiederum gegen den Sitzbezug 4, wodurch eine effizienter Wärmeübergang gewährleistet ist. Dieser Wärmeübergang wird zusätzlich unterstützt durch das Gewicht der auf dem Sitz sitzenden Person. Das Heizelement kann geregelt werden durch einen in der Ableitung des Fluidleitungssystems 8 angeordneten Temperatursensors 21. Weitere Temperatursensoren 21 sind in der Klimatisierungsmatte oder unmittelbar am Sitzbezug sowie in dem Kühlflüssigkeitsvorratsbehälter 9 vorgesehen.

Alle Temperatursensoren 21 sind mit einem nicht dargestellten Steuerungssystem verbunden, in dem die gemessenen Temperaturwerte verarbeitet und die einzelnen Komponenten des Klimatisierungssystems entsprechend gesteuert werden.

### Testergebnis

Mit dem vorbeschriebenen System konnte die Oberfläche eines Ledersitzbezugs innerhalb von weniger als 1 Minute von einer Ausgangstemperatur von 85 °C auf eine Temperatur von 44 °C gesenkt werden, wobei die Klimatisierungsflüssigkeit eine Temperatur von 40 °C und das System ein Gesamtvolumen von 800 ml umfaßte.

### Bezugsziffernliste

- 1: Autositz
- 2: Sitzelement
- 3: Rückenlehnenelement
- 4: Sitzbezug
- 5: Klimatisierungsmatte
- 5a, 5b: Folien der Klimatisierungsmatte
- 6: Abstandshalterstruktur
- 7: Polsterkern
- 8: Fluidleitungssystem
- 9: Vorratsbehälter
- 10: Fluidkammern
- 11: Öffnungen
- 12: Schutzschicht
- 13: Fluideinlass
- 13a: Fluideinlassverteilerkammer
- 14: Fluidauslass
- 14a: Fluidauslasssammelkammer
- 15: Kühleinrichtung
- 16: Isolierung
- 17: Sperrventil
- 18: Bypass
- 19: Sperrventil
- 20: Heizelement
- 21: Temperatursensor
- P: Pumpe

## Patentansprüche

1. Klimatisierungsmatte (5), insbesondere für die Verwendung in einem Sitzelement (2) und/oder Lehnenelement (3), umfassend
- mindestens zwei flüssigkeitsdichte Kunststofflagen (5a, 5b), die so mit einander verbunden sind, dass sie ein Fluidkammersystem dazwischen bilden,
- mindestens einen Fluideinlaß (13) und mindestens einen Fluidauslaß (14) zum Hindurchleiten eines Fluids durch das Fluidkammersystem, und
- Öffnungen (11), die in den mindestens zwei Kunststofflagen (5a, 5b) verteilt angeordnet sind und diese derart durchdringen, dass Wasserdampf durch die Öffnungen (11) hindurch an dem Fluidkammersystem vorbei gelangen kann.

2. Klimatisierungsmatte nach Anspruch 1, wobei die Öffnungen (11) 20% bis 80% der projizierten Fläche der miteinander verbundenen Kunststofflagen (5a, 5b) bilden.

3. Klimatisierungsmatte nach Anspruch 2, wobei das Fluidkammersystem ein maximales Volumen von 0,3 l/m² bis 3 l/m² besitzt.

4. Klimatisierungsmatte nach einem der Ansprüche 1 bis 3, wobei die Öffnungen (11) einen mittleren Durchmesser im Bereich von 1 mm bis 20 mm besitzen.

5. Klimatisierungsmatte nach einem der Ansprüche 1 bis 4, wobei die mindestens zwei Kunststofflagen (5a, 5b) so mit einander verbunden sind, dass, wenn das Fluidkammersystem mit einem Fluid gefüllt ist, der maximale Abstand zwischen den mindestens zwei Kunststofflagen im Bereich von 0,5 mm bis 10 mm liegt.

6. Klimatisierungsmatte gemäß einem der Ansprüche 1 bis 5, wobei die mindestens zwei Kunststofflagen (5a, 5b) so miteinander verbunden sind, dass das Fluidkammersystem in eine Anzahl von Kammern (10) unterteilt ist, wobei jede Kammer (10) eine Fluidpassage definiert.

7. Klimatisierungsmatte gemäß Anspruch 6, wobei die Fluidpassagen mit einer mittleren Länge im Bereich von 3 mm bis 15 mm ausgebildet sind.

8. Klimatisierungsmatte gemäß Anspruch 6 oder 7, wobei mehrere oder alle Fluidpassagen an eine gemeinsame Fluidverteilerkammer (13a) und/oder Fluidsammelkammer (14a) angeschlossen sind.

9. Klimatisierungsmatte gemäß einem der Ansprüche 1 bis 8, wobei ein oder mehrere gemeinsame Fluidein- und -auslässe vorgesehen sind.

10. Klimatisierungsmatte gemäß einem der Ansprüche 1 bis 8, wobei ein einziger Fluideinlaß (13) und ein einziger Fluidauslaß (14) für die gesamte Klimatisierungsmatte vorgesehen sind.

11. Klimatisierungsmatte gemäß einem der Ansprüche 1 bis 10, wobei jede der mindestens zwei Kunststofflagen eine Dicke im Bereich von 10 µm bis 1 mm besitzen.

12. Klimatisierungsmatte gemäß Anspruch 11, wobei die Dicke einer jeden der mindestens zwei Kunststofflagen etwa 200 µm beträgt.

13. Klimatisierungsmatte nach einem der Ansprüche 1 bis 12, wobei mindestens eine der mindestens zwei Kunststofflagen zumindest bereichsweise luftdurchlässig ist.

14. Klimatisierungsmatte gemäß einem der Ansprüche 1 bis 13, wobei mindestens eine der Kunststofflagen aus thermoplastischem Polyurethan (TPU) besteht.

15. Klimatisierungsmatte gemäß einem der Ansprüche 1 bis 14, wobei mindestens eine der Kunststofflagen aus einem Fluorpolymer besteht.

16. Klimatisierungsmatte gemäß Anspruch 15, wobei das Fluorpolymer Polytetrafluorethylen (PTFE) ist.

17. Klimatisierungsmatte gemäß Anspruch 16, wobei das PTFE verdichtetes, gerecktes Polytetrafluorethylen (ePTFE) mit einer Porosität im Bereich von 2% bis 30% ist, um die Entlüftung des Fluidkammersystems zu unterstützen.

18. Sitzelement (2) und/oder Lehnenelement (3) mit einem äußeren Bezug (4) und einem Polsterkern (7) unter dem äußeren Bezug und mit einer zwischen dem Bezug (4) und dem Polsterkern (7) positionierten Klimatisierungsmatte (5) gemäß einem der Ansprüche 1 bis 17.

19. Sitzelement und/oder Lehnenelement gemäß Anspruch 18, wobei eine offene Abstandshalterstruktur (6) zwischen dem Bezug (4) und dem Polsterkern (7) vorgesehen ist, um eine Ventilierung durch die Abstandshalterstruktur (6) hindurch zu ermöglichen.

20. Sitzelement und/oder Lehnenelement gemäß Anspruch 19, wobei die Abstandshalterstruktur (6) zwischen der Klimatisierungsmatte (5) und dem Polsterkern (7) positioniert ist.

21. Sitzelement und/oder Lehnenelement gemäß einem der Ansprüche 18 bis 20, wobei die Klimatisierungsmatte (5) sich nicht durch die Oberfläche des äußeren Bezugs (4) sichtbar hindurchdrückt.

22. Sitzelement und/oder Lehnenelement gemäß einem der Ansprüche 18 bis 20, wobei der Bezug (4) ein wasserdampfdurchlässiges Ledermaterial umfaßt.

23. Sitzelement und/oder Lehnenelement nach Anspruch 22, wobei das Ledermaterial einen MVTR-Wert von über 10 mg/cm²h, insbesondere größer 12 mg/cm²h aufweist.

24. Sitzelement und/oder Lehnenelement gemäß einem der Ansprüche 18 bis 23, wobei die Klimatisierungsmatte (5) mit dem Bezug (4) verbunden ist.

25. Sitzelement und/oder Lehnenelement gemäß einem der Ansprüche 18 bis 24, wobei die Abstandshalterstruktur (6) mit der Klimatisierungsmatte (5) verbunden ist.

26. Klimatisierungssystem umfassend ein Sitzelement (2) und/oder Lehnenelement (3) gemäß einem der Ansprüche 18 bis 25 und des weiteren umfassend ein Flüssigkeitskreislaufsystem, an welches die Klimatisierungsmatte gemäß Anspruch 9 oder 10 über die Fluideinlaß- und -auslaßöffnungen (13, 14) angeschlossen ist.

27. Klimatisierungssystem gemäß Anspruch 26, des weiteren umfassend in dem Flüssigkeitskreislaufsystem eine Pumpe (P) hinter dem Auslaß (14), um Flüssigkeit durch das Fluidkammersystem zu saugen, und ein Einlaßsperrventil (17) vor dem Einlaß (13), um die Flüssigkeitsströmung in das Fluidkammersystem zu unterbrechen.

28. Klimatisierungssystem gemäß Anspruch 26 oder 27, des weiteren umfassend eine Belüftung zur Erzeugung eines Luftstroms über eine Oberfläche der Klimatisierungsmatte (5), um durch den Bezug (4) in das Sitzelement (2) und/oder Rückenlehnenelement (3) eintretende Feuchtigkeit und Dampf abzuleiten.

29. Klimatisierungssystem nach einem der Ansprüche 26 bis 28, des weiteren umfassend eine Kühleinrichtung (15) in dem Flüssigkeitskreislaufsystem zum Kühlen der Flüssigkeit.

30. Klimatisierungssystem nach Anspruch 29, wobei die Kühleinrichtung (15) so eingerichtet ist, dass die notwendige Leistung für die Kühleinrichtung von einer fahrzeugeigenen Batterie zur Verfügung gestellt werden kann.

31. Klimatisierungssystem nach Anspruch 30, wobei die Kühleinrichtung (15) durch Fernsteuerung oder Zeitschaltung aktivierbar ist.

32. Klimatisierungssystem gemäß einem der Ansprüche 26 bis 31, des weiteren umfassend ein Flüssigkeitsreservoir (9), wobei die Kühleinrichtung (15) zum Kühlen der Flüssigkeit in dem Flüssigkeitsreservoir (9) vorgesehen ist.

33. Klimatisierungssystem nach Anspruch 32, des weiteren umfassend eine Isolierung (16) für das Flüssigkeitsreservoir (9).

34. Klimatisierungssystem gemäß einem der Ansprüche 26 bis 33, des weiteren umfassend eine Heizeinrichtung (20) in dem Flüssigkeitskreislaufsystem zum Erhitzen der Flüssigkeit.

35. Klimatisierungssystem nach Anspruch 34, des weiteren umfassend eine Bypassleitung (18), durch welche hindurch die Flüssigkeit in dem Flüssigkeitskreislaufsystem geleitet wird, wenn die Heizeinrichtung (20) aktiviert ist.

36. Fahrzeugsitz umfassend ein Sitzelement (2) und/oder Lehnenelement (3) gemäß einem der Ansprüche 18 bis 25.

37. Fahrzeugsitz umfassend ein Klimatisierungssystem gemäß einem der Ansprüche 26 bis 36.

38. Fahrzeugsitz nach Anspruch 37 mit einem Klimatisierungssystem nach Anspruch 32 oder 33, wobei das Flüssigkeitsreservoir (9) unter dem Fahrzeugsitz angeordnet ist.

39. Fahrzeugsitz umfassend ein Sitzelement (2) und/oder ein Lehnenelement (3), insbesondere nach einem der Ansprüche 18 bis 25 mit einem äußeren Bezug (4) und einem Polsterkern (7) unter dem äußeren Bezug, wobei zwischen dem Bezug (4) und dem Polsterkern (7) eine Klimatisierungsmatte (5) nach einem der Ansprüche 1 bis 17 und eine Abstandshalterstruktur (6) positioniert sind, um eine Ventilierung durch die Abstandshalterstruktur (6) hindurch zu ermöglichen.

40. Verfahren zur Klimatisierung eines Sitzeelements und/oder Lehnenelements, wobei das Sitz- und/oder Lehnenelement einen äußeren Bezug (4) und unter dem Bezug (4) einen Polsterkern (7) besitzen, umfassend die folgenden Schritte:
- Führen eines Kühl- oder Heizfluids in ein geschlossenes Fluidkammersystem, so dass sich das Fluidkammersystemmit dem Fluid füllt, wobei das Fluidkammersystem zwischen dem Bezug (4) und dem Polsterkern (7) positioniert ist und zwischen den das Fluidkammersystem bildenden Fluidkammern (10) Öffnungen (11) so angeordnet sind, daß Wasserdampf und/oder ein Luftstrom durch die Öffnungen (11) hindurch an dem Fluidkammersystem wobei gelangen kann, und
- wenn eine Solltemperatur an einer vorbestimmten Stelle des Sitz- und/oder Lehnenelements erreicht ist, Ablassen des Fluids aus dem Fluidkammersystem, wodurch sich das Fluidkammersystem entleert.

41. Verfahren nach Anspruch 40, wobei sich das Fluidkammersystem beim Füllen aufbläht und wobei es beim Entleeren in sich zusammenfällt.

42. Verfahren gemäß Anspruch 40 oder 41, wobei, wenn das Fluidkammersystem mit Fluid gefüllt ist, das Fluid konstant oder intermittierend durch das Fluidkammersystem geführt wird.

43. Verfahren nach einem der Ansprüche 40 bis 42, des weiteren umfassend den Schritt des Erzeugens eines Luftstroms über eine Oberfläche des Fluidkammersystems.

44. Verfahren nach einem der Ansprüche 40 bis 43, wobei das Fluid eine Flüssigkeit ist.

45. Verfahren nach einem der Ansprüche 40 bis 44, wobei ein Klimatisierungssystem gemäß einem der Ansprüche 26 bis 35 eingesetzt wird.

46. Verfahren zur Klimatisierung eines Sitzelements nach Anspruch 19, umfassend den Schritt des Leitens eines Luftstroms durch die Abstandshalterstruktur (6) hindurch parallel zum Bezug (4).

## Claims

1. Climate control pad (5), in particular for the use in a seat element (2) and/or backrest element (3), comprising
- at least two liquid-tight polymer layers (5a, 5b), being interconnected so as to form a fluid compartment system there,
- at least one fluid inlet (13) and at least one fluid outlet (14) for passing a fluid through the fluid compartment system, and
- openings (11) distributed in the at least two polymer layers (5a, 5b) and penetrating these such that water vapor can pass through the openings (11) past the fluid compartment system.

2. Climate control pad according to claim 1, wherein the openings (11) constitute 20% to 80% of the projected surface of the interconnected polymer layers (5a, 5b).

3. Climate control pad according to claim 2, wherein the fluid compartment system has a maximum volume of 0.3 l/m² to 3 l/m².

4. Climate control pad according to any of claims 1 to 3, wherein the openings (11) have an average diameter in the range of 1 mm to 20 mm.

5. Climate control pad according to any of claims 1 to 4, wherein the at least two polymer layers (5a, 5b) are interconnected such when the fluid compartment system is filled with a fluid, the maximum distance between the at least two polymer layers is in the range of 0.5 mm to 10 mm.

6. Climate control pad according to any of claims 1 to 5, wherein the at least two polymer layers (5a, 5b) are interconnected such that the fluid compartment system is subdivided into a plurality of compartments (10), each compartment (10) defining a fluid passage.

7. Climate control pad according to claim 6, wherein the fluid passages are formed with an average length in the range of 3 mm to 15 mm.

8. Climate control pad according to claim 6 or 7, wherein several or all fluid passages are connected to a common fluid distributing compartment (13a) and/or fluid collecting compartment (14a).

9. Climate control pad according to any of claims 1 to 8, wherein one or more common fluid inlets and fluid outlets are provided.

10. Climate control pad according to any of claims 1 to 8, wherein a single fluid inlet (13) and a single fluid outlet (14) is provided for the entire climate control pad.

11. Climate control pad according to any of claims 1 to 10, wherein each of the at least two polymer layers has a thickness in the range of 10 micron to 1 mm.

12. Climate control pad according to claim 11, wherein the thickness of each of the at least two polymer layers is about 200 µm.

13. Climate control pad according to any of claims 1 to 12, wherein at least one of the at least two polymer layers is air-permeable at least in certain areas.

14. Climate control pad according to any of claims 1 to 13, wherein at least one of the polymer layers is made of thermoplastic polyurethane (TPU).

15. Climate control pad according to any of claims 1 to 14, wherein at least one of the polymer layers is made of a fluoropolymer.

16. Climate control pad according to claim 15, wherein the fluoropolymer is polytetrafluoroethylene (PTFE).

17. Climate control pad according to claim 16, wherein the PTFE is densified, expanded polytetrafluoroethylene (ePTFE) having a porosity in the range of 2% to 30%, to support the degassing of the fluid compartment system.

18. Seat element (2) and/or backrest element (3) with an outer cover (4) and an upholstery core (7) below the outer cover and having positioned a climate control pad (5) according to any of claims 1 to 17 intermediate the cover (4) and the upholstery core (7).

19. Seat element and/or backrest element according to claim 18, wherein an open spacer structure (6) is provided intermediate the cover (4) and the upholstery core (7) allowing ventilation through the spacer structure (6).

20. Seat element and/or backrest element according to claim 19, wherein the spacer structure (6) is positioned intermediate the climate control pad (5) and the upholstery core (7).

21. Seat element and/or backrest element according to any of claims 18 to 20, wherein the climate control pad (5) does not press against the outer cover (4) as to be visible through surface thereof.

22. Seat element and/or backrest element according to any of claims 18 to 20, wherein the cover (4) comprises a leather material permeable to water vapor.

23. Seat element and/or backrest element according to claim 22, wherein the leather material has an MVTR-value of more than 10 mg/cm² h, in particular more than 12 mg/cm² h.

24. Seat element and/or backrest element according to any of claims 18 to 23, wherein the climate control pad (5) is connected with the cover (4).

25. Seat element and/or backrest element according to any of claims 18 to 24, wherein the spacer structure (6) is connected with the climate control pad (5).

26. Climate control system comprising a seat element (2) and/or backrest element (3) according to any of claims 18 to 25 and further comprising a liquid circulation system to which the climate control pad according to claim 9 or 10 is connected via the fluid inlet and outlet ports (13, 14).

27. Climate control system according to claim 26, further comprising in the liquid circulation system a pump (P) behind the outlet (14) for drawing liquid through the fluid compartment system, and an inlet stop valve (17) in front of the inlet (13) for interrupting liquid flow into the fluid compartment system.

28. Climate control system according to claim 26 or 27, further comprising a ventilation for creating an air flow across a surface of the climate control pad (5), so as to drain moisture and vapor passing through the cover (4) into the seat element (2) and/or backrest element (3).

29. Climate control system according to any of claims 26 to 28, further comprising a chiller (15) the liquid circulation system for cooling the liquid.

30. Climate control system according to claim 29, wherein the chiller (15) is arranged such that the necessary power for the chiller can be provided by a vehicle's own battery.

31. Climate control system according to claim 30, wherein the chiller (15) is activable by remote control or time switch.

32. Climate control system according to any of claims 26 to 31, further comprising a liquid reservoir (9), the chiller (15) for cooling the liquid being provided in the liquid reservoir (9).

33. Climate control system according to claim 32, further comprising an insulation (16) for the liquid reservoir (9).

34. Climate control system according to any of claims 26 to 33, further comprising a heater (20) in the liquid circulation system for heating the liquid.

35. Climate control system according to claim 34, further comprising a by-pass duct (18), through which the liquid in the liquid circulation system is passed when the heater (20) is activated.

36. Vehicle seat comprising a seat element (2) and/or backrest element (3) according to any of claims 18 to 25.

37. Vehicle seat comprising a climate control system according to any of claims 26 to 36.

38. Vehicle seat according to claim 37 with a climate control system according to claim 32 or 33, wherein the liquid reservoir (9) is disposed under the vehicle seat.

39. Vehicle seat comprising a seat element (2) and/or a backrest element (3), in particular according to any of claims 18 to 25 with an outer cover (4) and an upholstery core (7) below the outer cover, wherein a climate control pad (5) according to any of claims 1 to 17 and a spacer structure (6) is positioned intermediate the cover (4) and the upholstery core (7), allowing ventilation through the spacer structure (6).

40. Method of controlling the climate of a seat element and/or backrest element, wherein the seat and/or backrest element have an outer cover (4) and below the cover (4) an upholstery core (7), comprising the following steps:
- passing a cooling or heating fluid into a closed fluid compartment system, so as to fill the fluid compartment system, the fluid compartment system being positioned intermediate the cover (4) and the upholstery core (7), and being disposed intermediate the fluid compartments (10) forming the fluid compartment system such that water vapor and/or an air flow can pass through the openings (11) and past the fluid compartment system, and
- when a set temperature is reached at a predefined location of the seat and/or backrest element, draining the fluid from the fluid compartment system, thereby emptying the fluid compartment system.

41. Method according to claim 40, wherein the fluid compartment system swells when being filled and wherein it collapses when being emptied.

42. Method according to claim 40 or 41, wherein, once the fluid compartment system is filled with fluid, the fluid constantly or intermittently is drawn through the fluid compartment system.

43. Method according to one of the claims 40 to 42, further comprising the step of generating an air flow across a surface of the fluid compartment system.

44. Method according to any of claims 40 to 43, wherein the fluid is a liquid.

45. Method according to one of the claims 40 to 44, wherein a climate control system according to any of claims 26 to 35 is used.

46. Method of controlling the climate of a seat element according to claim 19, comprising the step of passing an air flow through the spacer structure (6) parallel to the cover (4).

## Revendications

1. Natte de climatisation (5), en particulier pour l'utilisation dans un élément d'assise (2) et/ou un élément de dossier (3), comprenant :
- au moins deux couches de matière plastique (5a, 5b), étanches à un liquide, lesquelles couches de matière plastique sont combinées l'une avec l'autre, de manière telle qu'elles forment entre elles un système de chambres de fluide,
- au moins une entrée de fluide (13) et au moins une sortie de fluide (14) servant à faire passer un fluide à travers le système de chambres de fluide, et
- des ouvertures (11) qui sont disposées en étant réparties dans les couches de matière plastique (5a, 5b) au moins au nombre de deux et traversent ces couches de matière plastique de manière telle, que de la vapeur d'eau, en traversant les ouvertures (11), puisse passer devant le système de chambres de fluide.

2. Natte de climatisation selon la revendication 1, dans laquelle les ouvertures (11) forment entre 20 % et 80 % de la surface projetée des couches de matière plastique (5a, 5b) combinées l'une avec l'autre.

3. Natte de climatisation selon la revendication 2, dans laquelle le système de chambres de fluide a un volume maximum compris entre 0,3 l/m² et 3 l/m².

4. Natte de climatisation selon l'une quelconque des revendications 1 à 3, dans laquelle les ouvertures (11) ont un diamètre moyen dans la plage comprise entre 1 mm et 20 mm.

5. Natte de climatisation selon l'une quelconque des revendications 1 à 4, dans laquelle les couches de matière plastique (5a, 5b) au moins au nombre de deux sont combinées l'une avec l'autre, de manière telle que lorsque le système de chambres de fluide est rempli d'un fluide, l'espacement maximum entre les couches de matière plastique - au moins au nombre de deux - se situe dans la plage comprise entre 0,5 mm et 10 mm.

6. Natte de climatisation selon l'une quelconque des revendications 1 à 5, dans laquelle les couches de matière plastique (5a, 5b) au moins au nombre de deux sont combinées l'une avec l'autre, de manière telle que le système de chambres de fluide soit divisé en un nombre de chambres (10) où chaque chambre (10) définit un passage de fluide.

7. Natte de climatisation selon la revendication 6, dans laquelle les passages de fluide sont configurés en ayant une longueur moyenne se situant dans la plage comprise entre 3 mm et 15 mm.

8. Natte de climatisation selon la revendication 6 ou 7, dans laquelle plusieurs ou tous les passages de fluide sont reliés à une chambre commune (13a) de répartiteur de fluide et/ou à une chambre commune (14a) de collecteur de fluide.

9. Natte de climatisation selon l'une quelconque des revendications 1 à 8, dans laquelle il est prévu une ou plusieurs entrées et sorties communes de fluide.

10. Natte de climatisation selon l'une quelconque des revendications 1 à 8, dans laquelle il est prévu une seule entrée de fluide (13) et une seule sortie de fluide (14) pour la totalité de la natte de climatisation.

11. Natte de climatisation selon l'une quelconque des revendications 1 à 10, dans laquelle chacune des couches de matière plastique au moins au nombre de deux a une épaisseur se situant dans la plage comprise entre 10 µm et 1 mm.

12. Natte de climatisation selon la revendication 11, dans laquelle l'épaisseur de chacune des couches de matière plastique au moins au nombre de deux est à peu près égale à 200 µm.

13. Natte de climatisation selon l'une quelconque des revendications 1 à 12, dans laquelle au moins l'une des couches de matière plastique au moins au nombre de deux, est, au moins par zones, perméable à l'air.

14. Natte de climatisation selon l'une quelconque des revendications 1 à 13, dans laquelle au moins l'une des couches de matière plastique se compose d'un polyuréthane thermoplastique (TPU).

15. Natte de climatisation selon l'une quelconque des revendications 1 à 14, dans laquelle au moins l'une des couches de matière plastique se compose d'un polymère fluoré.

16. Natte de climatisation selon la revendication 15, dans laquelle le polymère fluoré est du polytétrafluoroéthylène (PTFE).

17. Natte de climatisation selon la revendication 16, dans laquelle le polytétrafluoroéthylène (PTFE) est un polytétrafluoroéthylène comprimé et étiré (ePTFE) ayant une porosité dans la plage comprise entre 2 % et 30 %, pour favoriser la ventilation du système de chambres de fluide.

18. Elément d'assise (2) et/ou élément de dossier (3) comprenant un revêtement extérieur (4) et une partie centrale de rembourrage (7) placée sous le revêtement extérieur, et une natte de climatisation (5) conforme à l'une quelconque des revendications 1 à 17 positionné entre le revêtement (4) et la partie centrale de rembourrage (7).

19. Elément d'assise et/ou élément de dossier selon la revendication 18, où il est prévu une structure de maintien d'espacement (6) ouverte entre le revêtement (4) et la partie centrale de rembourrage (7), pour permettre une ventilation à travers la structure de maintien d'espacement (6).

20. Elément d'assise et/ou élément de dossier selon la revendication 19, où la structure de maintien d'espacement (6) est positionnée entre la natte de climatisation (5) et la partie centrale de rembourrage (7).

21. Elément d'assise et/ou élément de dossier selon l'une quelconque des revendications 18 à 20, où la natte de climatisation ne s'appuie pas, de façon visible, à travers la surface du revêtement extérieur (4).

22. Elément d'assise et/ou élément de dossier selon l'une quelconque des revendications 18 à 20, où le revêtement (4) comprend un matériau en cuir perméable à la vapeur d'eau.

23. Elément d'assise et/ou élément de dossier selon la revendication 22, où le matériau en cuir présente une valeur MVTR supérieure à 10 mg/cm²h, en particulier supérieure à 12 mg/cm²h.

24. Elément d'assise et/ou élément de dossier selon l'une quelconque des revendications 18 à 23, où la natte de climatisation (5) est combinée avec le revêtement (4).

25. Elément d'assise et/ou élément de dossier selon l'une quelconque des revendications 18 à 24, où la structure de maintien d'espacement (6) est combinée avec la natte de climatisation (5).

26. Système de climatisation comprenant un élément d'assise (2) et/ou un élément de dossier (3) conformément à l'une quelconque des revendications 18 à 25 et comprenant en outre un système de circuit de liquide auquel est relié la natte de climatisation, par des ouvertures (13, 14) d'entrée et de sortie de fluide, selon la revendication 9 ou 10.

27. Système de climatisation selon la revendication 26, comprenant en outre, dans le système de circuit de liquide, une pompe (P) placée en aval de la sortie (14), pour aspirer du liquide traversant le système de chambres de fluide, et un clapet antiretour d'entrée (17) placé en amont de l'entrée (13), pour interrompre l'écoulement de liquide dans le système de chambres de fluide.

28. Système de climatisation selon la revendication 26 ou 27, comprenant en outre une ventilation pour la production d'un flux d'air sur une surface de la natte de climatisation (5), pour évacuer l'humidité et la vapeur entrant, par le revêtement (4), dans l'élément d'assise (2) et/ou dans l'élément de dossier (3).

29. Système de climatisation selon l'une quelconque des revendications 26 à 28, comprenant en outre un dispositif de refroidissement (15) placé dans le système de circuit de liquide et servant à refroidir le liquide.

30. Système de climatisation selon la revendication 29, dans lequel le dispositif de refroidissement (15) est monté de manière telle, que la puissance nécessaire pour le dispositif de refroidissement puisse être fournie par une batterie propre au véhicule.

31. Système de climatisation selon la revendication 30, dans lequel le dispositif de refroidissement (15) peut être activé par une commande à distance ou par un circuit de synchronisation.

32. Système de climatisation selon l'une quelconque des revendications 26 à 31, comprenant en outre un réservoir de liquide (9), où le dispositif de refroidissement (15) est prévu pour le refroidissement du liquide contenu dans le réservoir de liquide (9).

33. Système de climatisation selon la revendication 32, comprenant en outre une isolation (16) pour le réservoir de liquide (9).

34. Système de climatisation selon l'une quelconque des revendications 26 à 33, comprenant en outre un dispositif de chauffage (20) prévu dans le système de circuit de liquide et servant à chauffer le liquide.

35. Système de climatisation selon la revendication 34, comprenant en outre une conduite de dérivation (18) à travers laquelle est guidé le liquide contenu dans le système de circuit de liquide, lorsque le dispositif de chauffage (20) est activé.

36. Siège de voiture comprenant un élément d'assise (2) et/ou un élément de dossier (3) conformément à l'une quelconque des revendications 18 à 25.

37. Siège de voiture comprenant un système de climatisation conformément à l'une quelconque des revendications 26 à 36.

38. Siège de voiture selon la revendication 37 comprenant un système de climatisation selon la revendication 32 ou 33, où le réservoir de liquide (9) est disposé sous le siège de la voiture.

39. Siège de voiture comprenant un élément d'assise (2) et/ou un élément de dossier (3), en particulier selon l'une quelconque des revendications 18 à 25, comprenant un revêtement extérieur (4) et une partie centrale de rembourrage (7) placée sous le revêtement extérieur, où une natte de climatisation (5) selon l'une quelconque des revendications 1 à 17 et une structure de maintien d'espacement (6) sont disposés entre le revêtement (4) et la partie centrale de rembourrage (7), pour permettre une ventilation à travers la structure de maintien d'espacement (6).

40. Procédé de climatisation d'un élément d'assise et/ou d'un élément de dossier, où l'élément d'assise et/ou l'élément de dossier comprennent un revêtement extérieur (4) et une partie centrale de rembourrage (7) placée sous le revêtement (4), comportant les étapes suivantes:
- consistant à faire passer un fluide de refroidissement ou de chauffage dans un système fermé de chambres de fluide, de sorte que le système de chambres de fluide se remplisse du fluide, où le système de chambres de fluide est positionné entre le revêtement (4) et la partie centrale de rembourrage (7), et des ouvertures (11) sont disposées entre les chambres de fluide (10) formant le système de chambres de fluide, de manière telle que de la vapeur d'eau et/ou un flux d'air, en traversant les ouvertures (11), puisse passer devant le système de chambres de fluide, et,
- lorsqu'une température théorique est atteinte au niveau d'un emplacement prédéterminé de l'élément d'assise et/ou de l'élément de dossier, consistant à évacuer le fluide du système de chambres de fluide, grâce à quoi le système de chambres de fluide se vide.

41. Procédé selon la revendication 40, dans lequel le système de chambres de fluide se gonfle lors du remplissage et où il s'aplatit lorsqu'il est vidé.

42. Procédé selon la revendication 40 ou 41, dans lequel, lorsque le système de chambres de fluide est rempli de fluide, le fluide est guidé de manière constante ou intermittente à travers le système de chambres de fluide.

43. Procédé selon l'une quelconque des revendications 40 à 42, comprenant en outre l'étape consistant à produire un flux d'air sur une surface du système de chambres de fluide.

44. Procédé selon l'une quelconque des revendications 40 à 43, dans lequel le fluide est un liquide.

45. Procédé selon l'une quelconque des revendications 40 à 44, dans lequel un système de climatisation est utilisé conformément à l'une quelconque des revendications 26 à 35.

46. Procédé de climatisation d'un élément d'assise selon la revendication 19, comprenant l'étape consistant à faire passer un flux d'air à travers la structure de maintien d'espacement (6), parallèlement au revêtement (4).
